# EUROPÄISCHE PATENTANMELDUNG

(11) **EP 1 068 802 A2**
(43) Veröffentlichungstag der Anmeldung: **17.01.2001**
(21) Anmeldenummer: 00115262.8
(22) Anmeldetag: 14.07.2000
(51) Int. Cl.: A23B 7/02, A23B 9/08, A23L 3/40

(54) **Anlage und Verfahren zum Trocknen wärmeempfindlicher Güter**

(30) Priorität: 16.07.1999 DE 19933477
(71) Anmelder: Tetkov, Emmerich, 53010 Casciano di Murio (IT)
(72) Erfinder: Tetkov, Emmerich, 53010 Casciano Di Murio (IT); Pohlert-Tetkov, Renate, 53010 Casciano di Murio (IT)
(74) Vertreter: Luderschmidt, Schüler & Partner GbR

(57) **Zusammenfassung**

Die Erfindung betrifft eine Anlage zum Trocknen wärmeempfindlicher Güter mit mindestens einer Einrichtung (11,42) zur Gewinnung von Energie zum Trocknen, mindestens eine Einrichtung (4, 12a) zum Bewegen des Energietransportmediums, mit dem die gewonnene Energie zum Trocknen transportiert werden kann, und ist dadurch gekennzeichnet, daß mehrere separate Einrichtungen (2, 2a) zur Aufnahme der zu trocknenden wärmeempfindlichen Güter, mindestens eine Einrichtung (1) zur Speicherung und Abgabe der gewonnenen Energie zum Trocknen und mindestens eine Einrichtung (12, 13, 43) zur Entfernung der Feuchtigkeit aus dem Energietransportmedium und/oder Rückgewinnung der in dem Energietransportmedium enthaltenen Restenergie vorgesehen sind. Die erfindungsgemäße Anlage hat insbesondere den Vorteil, daß in den separaten Einrichtungen (2, 2a) zur Aufnahme der zu trocknenden wärmeempfindlichen Güter verschiedene Güter gleichzeitig getrocknet werden können. Dabei können je nach dem zu trocknendem Gut unterschiedliche Trocknungsbedingungen in den einzelnen Einrichtungen zur Aufnahme der zu trocknenden Güter eingestellt werden.

## Beschreibung

Die vorliegende Erfindung betrifft eine Anlage und ein Verfahren zum Trocknen wärmeempfindlicher Güter. Insbesondere betrifft die Erfindung eine Trockenanlage, mit der wärmeempfindliche Güter wie beispielsweise erntefrische Pflanzenteile, z. B. Blätter, Blüten, Stengel und/oder Wurzeln von Nutzpflanzen, oder Lebensmittel schonend und unter Nutzung regenerativer Energiequellen bzw. weitgehend wärmeverlustfreier Führung der Energieströme getrocknet und damit für eine spätere Weiterverarbeitung konditioniert werden können, ohne ihre Inhaltsstoffe zu schädigen, sowie ein Verfahren zum schonenden Trocknen derartiger Materialien.

Eine derartige Technologie kann, ohne daß dies als Beschränkung zu verstehen ist, beispielsweise dazu verwendet werden, erntefrische Pflanzen oder Pflanzenteile schonend zu konservieren, wenn diese an einem vom Ernteort verschiedenen Ort verarbeitet werden sollen, der Transport des frischen Pflanzenmaterials jedoch zu einer Qualitätsverschlechterung der frischen Pflanzenteile oder Verringerung der Ausbeute an gewünschtem/gewünschten Inhaltsstoff(en) der frischen Pflanzenteile bei der späteren Verarbeitung führen würde. Ein anderes denkbares Einsatzgebiet könnte die Trocknung von Fleisch oder Käse zur Reifung und/oder zum Entzug von Wasser beispielsweise zur Konservierung sein.

In Fällen wie den vorgenannten kommt regelmäßig bevorzugt oder sogar ausschließlich eine Trocknung der frisch geernteten Pflanzenteile oder Lebensmittel in Frage. So wird beispielsweise Tee nach dem Ernten und vor dem Fermentieren auf großen Welkflächen bei 25 bis 35 °C getrocknet, um den Tee-Pflanzenteilen eine erhebliche Menge (etwa 50 % des Gewichts der Pflanzenteile) des Wassers zu entziehen. In ähnlicher Weise werden Teile von Pflanzen (Blüten, Blätter, Stengel), deren Inhaltsstoffe durch Extraktion für eine spätere industrielle Verwendung gewonnen werden können, getrocknet, um die Pflanzen (-Teile) für einen Transport zwischen Ernteort und Verarbeitungsort und gegebenenfalls Verbraucher haftbarer zu machen. Beispiele hierfür sind Blätter der Pfefferminze, die für die Gewinnung von Pfefferminzöl oder für die Tee-Herstellung verwendet werden, oder Blüten von Kamille, deren Inhaltsstoffe gewonnen werden und in der Arzneimittelherstellung Verwendung finden. Fleisch (wie z. B. Schinken) und Käse werden zur Reifung unter gleichzeitigem Entzug von Wasser aufgehängt bzw. aufgestellt. In allen Fällen kommt es zur Schonung von Aroma oder Zusammensetzung der Inhaltsstoffe auf moderate Bedingungen beim Entzug des Wassers an, um nicht eine Qualitätseinbuße der Produkte hinnehmen zu müssen. Diese moderaten Bedingungen konnten in bisher bekannten Verfahren nur sichergestellt werden, wenn erhebliche Aufwendungen apparativer und energetischer Art unternommen wurden. Insbesondere das Trocknen von Nutzpflanzen stellte immer wieder ein Problem dar, speziell deswegen, weil die darin enthaltenen Pflanzen-Inhaltsstoffe sehr empfindlich gegen erhöhte Temperaturen oder zu lange Liegezeiten (infolge zu langer Trockungszeiten) sind und sich leicht in wenig erwünschte Derivate (Spalt- oder Oxidationsprodukte) umwandeln, die die Qualität der aus den Pflanzenteilen gewonnenen Inhaltsstoffe beeinträchtigen.

Die Druckschrift EP-A 0 556 101 beschreibt ein Verfahren zum Sterilisieren und gegebenenfalls Trocknen pflanzlicher Produkte wie Gewürze und Gewürzkräuter. In diesem Verfahren wird im ersten Schritt das pflanzliche Produkt mit Wasserdampf behandelt, bevor es einer Kühlzone zugeführt wird, wo der Dampf und gegebenenfalls abgetriebene Pflanzen-Inhaltsstoffe wieder auf dem pflanzlichen Produkt niedergeschlagen werden. Danach wird das pflanzliche Produkt wieder auf seinen ursprünglichen Feuchtigkeitsgehalt getrocknet, beispielsweise mittels eines in dem US-Patent Nr. 4,844,933 oder in dem Dokument WO 90/00865 beschriebenen Verfahren. Mit diesem Verfahren wird jedoch das Ziel der vorliegenden Erfindung nicht erreicht, erntefrische Pflanzen oder Pflanzenteile oder auch andere wärmeempfindliche Güter in der Weise zu trocknen, daß ihr Feuchtigkeits-/Wassergehalt nach dem Trockenvorgang zu Zwecken der Konservierung oder Reifung deutlich unter demjenigen der jeweiligen Güter vor Beginn des Trocknungsvorgangs liegt.

Die Druckschrift EP-B 0 564 573 beschreibt ein Verfahren zum Behandeln eines frischen Pflanzenprodukts (z. B. Kräutern) unter Eintauchen in eine wäßrige Flüssigkeit, die ein osmotisches Mittel wie beispielsweise Monosaccharide, Disaccharide, Maisstärkesirup oder Derivate davon enthält, die in das Pflanzengewebe eindringen bzw. dieses durchtränken und beim nachfolgenden Trocknen einen amorphen Feststoff bilden, und anschließendes (herkömmliches) Trocknen der so behandelten Pflanzen. Mit diesem Verfahren sollen die gewünschten Eigenschaften bzw. Qualitäten natürlicher Pflanzenprodukte, wie sie in frischen Pflanzen gefuden werden, insbesondere ihr Aussehen (Farbe, Textur, Gesamtaussehen), ihr Geschmack bzw. Aroma, erhalten werden, wobei deren Lagerfähigkeit verbessert wird. Ein Nachteil dieses Verfahrens ist es jedoch, daß bei zahlreichen Pflanzen bzw. Pflanzenteilen bei einer derartigen Behandlung eine Veränderung ihrer Inhaltsstoffe hingenommen werden muß und damit ein solches Verfahren ausgeschlossen ist, will man nicht Ausbeute- und Qualitätsverschlechterungen großen Ausmaßes hinnehmen.

In der Druckschrift EP-B 0 115 493 wird ein Verfahren zur Entwässerung von nassen Pflanzen beschrieben, in dem die nassen Pflanzen einem oder mehreren Auspreß-Vorgängen unterworfen werden, der Saft des letzten Auspreß-Vorgangs konzentriert und zum erneuten Einweichen der nassen Pflanzen verwendet wird und die nassen, wieder mit dem Saft beaufschlagten Pflanzen in einem weiteren Schritt getrocknet werden. Dieses Verfahren hat den Nachteil, daß bei dem Auspreß-Vorgang/den Auspreß-Vorgängen eine schonende Behandlung wärme- oder oxidationsempfildlicher Güter nicht erreicht werden kann. Darüber hinaus unterliegen die abgepreßten Substanzen der sofortigen Oxidation, so daß nach Beaufschlagung der Pflanzen mit dem abgepreßten Saft nicht mehr die Pflanzen (einschließlich Ihrer Inhaltsstoffe) vorliegen wie vor dem Auspreß-Vorgang.

Die Druckschrift DE-A 41 31 209 offenbart ein Verfahren zum Herstellen getrockneter Gewürznelken-Scheiben als Zugabe zu Tabak-Schnitt zum Rauchen. In diesem Verfahren werden die geernteten Gewürznelken einer Erhöhung des Feuchtigkeitsgehalts unter Zusatz von Dampf und Wasser unterworfen, um die Bildung von Gewürznelken-Staub zu vermeiden, wonach sie zu Teilchen (Scheiben) der gewünschten Größe geschnitten werden. Letztere werden vor der Zugabe zum Tabak-Schnitt in mehreren Stufen getrocknet, wobei die geschnittenen Gewürznelken-Teilchen einer Vielzahl verschiedener Luftstrom-Richtungen und Luft-Temperaturen ausgesetzt werden. Auch in diesem Verfahren werden die Pflanzenteile (hier: die getrockneten Blütenknospen) zuerst befeuchtet, um bestimmte Nachteile in einem Verarbeitungsverfahren (hier: Staubbildung) zu vermeiden. Danach wird der vorherige Feuchtigkeitsgehalt im (mit herkömmlicher Technologie durchgeführten) Trocknungsvorgang wieder eingestellt. Dies steht im Gegensatz zu den Aufgaben der vorliegenden Erfindung.

Die Druckschrift EP-B 0 356 240 (entsprechend der Druckschrift DE-A 33 68 001) beschreibt ein Verfahren zum Trocknen eines biologischen Materials. Unter 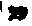 biologischem Material" werden gemäß der genannten Druckschrift verdünnte wäßrige Flüssigkeiten verstanden, wie sie durch Auspressen oder Extrahieren aus Pflanzen erhalten werden. Die Druckschrift befaßt sich nicht mit dem direkten Trocknen von Pflanzen oder ihren Teilen oder dem Wasserentzug aus anderen wärmeempfindlichen Gütern wie beispielsweise Lebensmitteln beim Reifen.

Bei allen diesen Vorschlägen des Standes der Technik blieb insbesondere außer acht, die Energie zur Erhöhung der Temperatur des Trocknungsvorgangs Ressourcen-schonend zu gewinnen und während des Trocknungsvorgangs die Energieströme so zu fuhren, daß eine weitgehende Ausnutzung der Gesamtenergie erfolgen kann. Insbesondere die Aufgabe, regenerierbare Energien zur Wärmeerzeugung zu verwenden und die bei Verwendung derartiger Energiequellen gewonnene Energie so weit als möglich zu nutzen, beispielsweise durch vernünftige Recyclisierung, wurde im oben angegebenen Stand der Technik nur unzureichend gelöst. Dies hatte zur Folge, daß die Trocknungsschritte für das jeweilige Gesamtverfahren weitgehend unökonomisch waren und die Endprodukte unnötig verteuerten.

Die DE 195 08 400 A1 offenbart eine Vorrichtung sowie ein Verfahren zum Trocknen von feuchtem Material. Die bekannte Vorrichtung umfaßt eine Einrichtung zur Gewinnung von Energie in Form eines Kollektorfeldes, mehrere Einrichtungen zum Bewegen des Mediums mit dem die Energie transportiert wird, in Form von Ventilatoren, und eine Trocknungseinrichtung zur Aufnahme der zu trocknenden wärmeempfindlichen Güter. Die zu trocknenden wärmeempfindlichen Güter werden durch eine Eintrittsöffnung in die Trocknungseinrichtung eingebracht und durch diese geführt, um diese im Anschluß daran durch eine Austragsöffnung zu entnehmen. In der bekannten Vorrichtung kann lediglich eine Art feuchten Materials gleichzeitig getrocknet werden.

Im Rahmen der vorliegenden Erfindung wurde nun gefunden, daß eine Anlage und ein Verfahren zum Trocknen wärmeempfindlicher Güter bereitgestellt werden kann, mit der/mit denen in ökonomischer Weise aus regenerierbaren Energiequellen gewonnene Energie weitgehend für einen Trocknungsprozeß genutzt werden kann und damit den bisherigen Nachteilen des Standes der Technik erfolgreich abgeholfen werden kann.

Der Erfindung liegt unter anderem die Aufgabe zugrunde, eine Vorrichtung und ein Verfahren zum Trocknen wärmeempfindlicher Güter anzugeben, die bzw. das die gleichzeitige Trocknung verschiedener wärmeempfindlicher Güter erlaubt; die bei unterschiedlichen Bedingungen, wie z. B. Feuchtigkeit, Temperatur etc., getrocknet werden müssen.

Die Lösung dieser Aufgabe erfolgt anhand der in den Patentansprüchen 1 bzw. 8 angegebenen Merkmale. Vorteilhafte Ausführungsformen sind Gegenstand der Unteransprüche.

Die Erfindung betrifft eine Anlage zum Trocknen wärmeempfindlicher Güter mit mindestens einer Einrichtung (11,42) zur Gewinnung von Energie zum Trocknen, mindestens einer Einrichtung (4, 12a) zum Bewegen des Energietransportmediums, mit dem die gewonnene Energie zum Trocknen transportiert werden kann, und ist dadurch gekennzeichnet, daß mehrere separate Einrichtungen (2, 2a) zur Aufnahme der zu trocknenden wärmeempfindlichen Güter, mindestens eine Einrichtung (1) zur Speicherung und Abgabe der gewonnenen Energie zum Trocknen und mindestens eine Einrichtung (12, 13,43) zur Entfernung der Feuchtigkeit aus dem Energietransportmedium und/oder Rückgewinnung der in dem Energietransportmedium enthaltenen Restenergie vorgesehen sind.

Die erfindungsgemäße Anlage hat insbesondere den Vorteil, daß in den separaten Einrichtungen (2, 2a) zur Aufnahme der zu trocknenden wärmeempfindlichen Güter verschiedene Güter gleichzeitig getrocknet werden können. Dabei können je nach dem zu trocknendem Gut unterschiedliche Trocknungsbedingungen in den einzelnen Einrichtungen zur Aufnahme der zu trocknenden Güter eingestellt werden.

In einer bevorzugten Ausführungsform ist mindestens eine Einrichtung (4, 12a) zum Bewegen des Energietransportmediums vor jeder einzelnen separaten Einrichtung (2, 2a) zur Aufnahme der zu trocknenden wärmeempfindlichen Güter angeordnet. Diese voneinander unabhängigen Einrichtungen zum Bewegen des Energietransportmediums können jeweils derart eingestellt werden, daß sich in jeder Einrichtung zur Aufnahme der Güter unterschiedliche Trocknungsbedingungen ergeben. Die Abfuhr der durch die Einrichtungen zur Aufnahme der zu trocknenden wärmeempfindlichen Güter geleiteten Luft kann im Anschluß daran wieder gemeinsam erfolgen.

In einer bevorzugten Ausführungsform umfaßt die Anlage zum Trocknen wärmeempfindlieher Güter auch an sich bekannte Kontrolleinrichtungen für den Feuchtigkeitsgehalt des Mediums, mit dem die gewonnene Energie zum Trocknen transportiert wird, und/oder Einrichtungen zur Überwachung und/oder Anpassung der Strömungsgeschwindigkeit und -Richtung des Mediums, mit dem die gewonnene Energie transportiert wird.

Die Erfindung wird nachfolgend unter Bezugnahme auf die Figuren näher erläutert, ohne jedoch auf die in den Figuren beschriebenen Ausführungsformen beschränkt zu sein. Es zeigen
- Figur 1 eine vereinfachte Skizze des Aufbaus der erfindungsgemäßen Anlage zum Trocknen wärmeempfindlicher Güter;

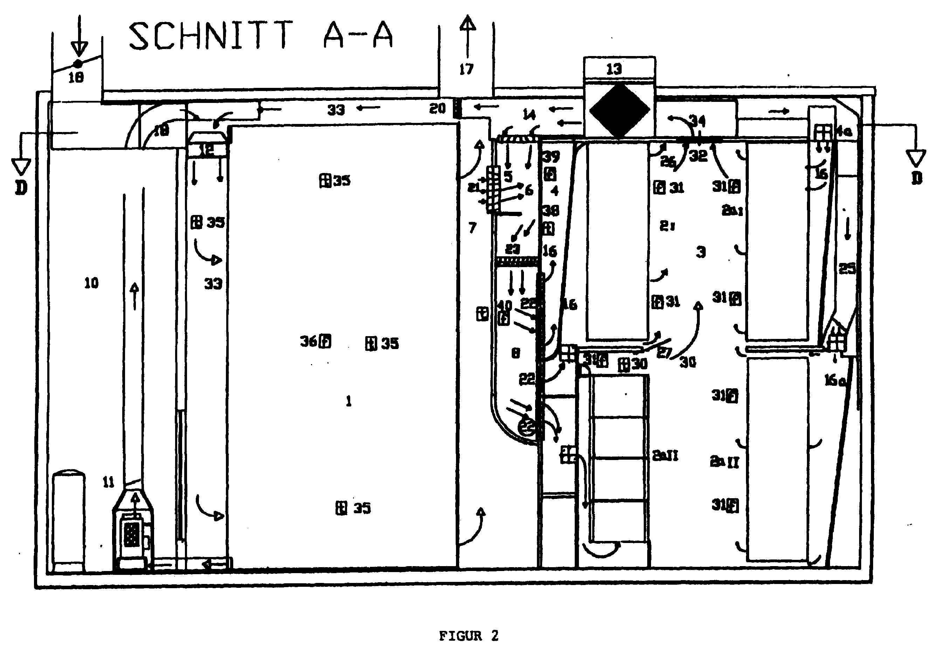

- Figur 2 einen Querschnitt der erfindungsgemäßen Anlage im Bereich der Wärmerückgewinnungs-Einrichtung und Entfeuchtungs-Einrichtung;

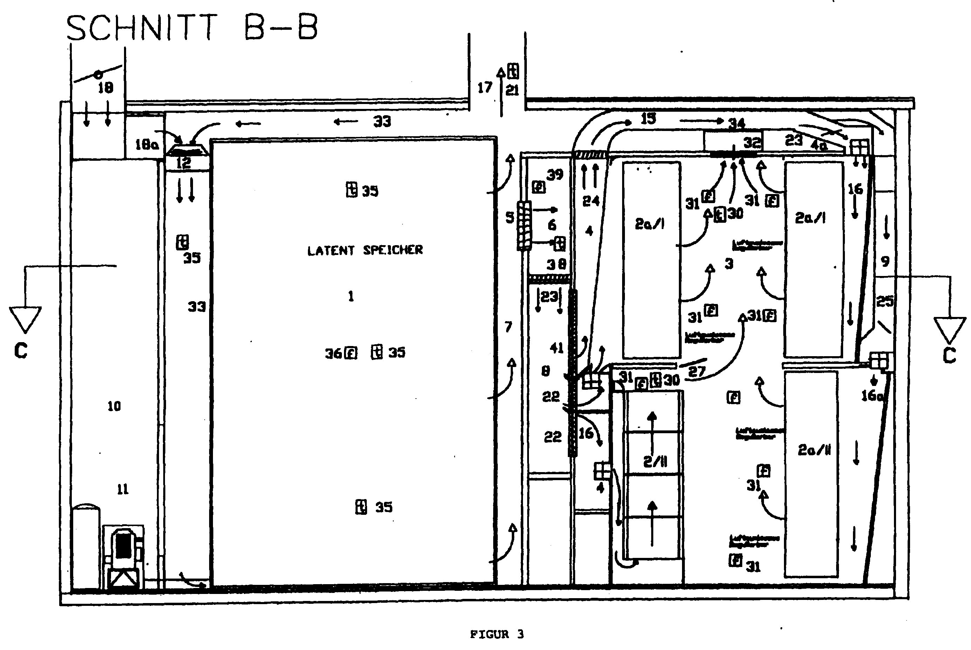

- Figur 3 einen Querschnitt der erfindungsgemäßen Anlage in Bereich der Zuluftkanäle;

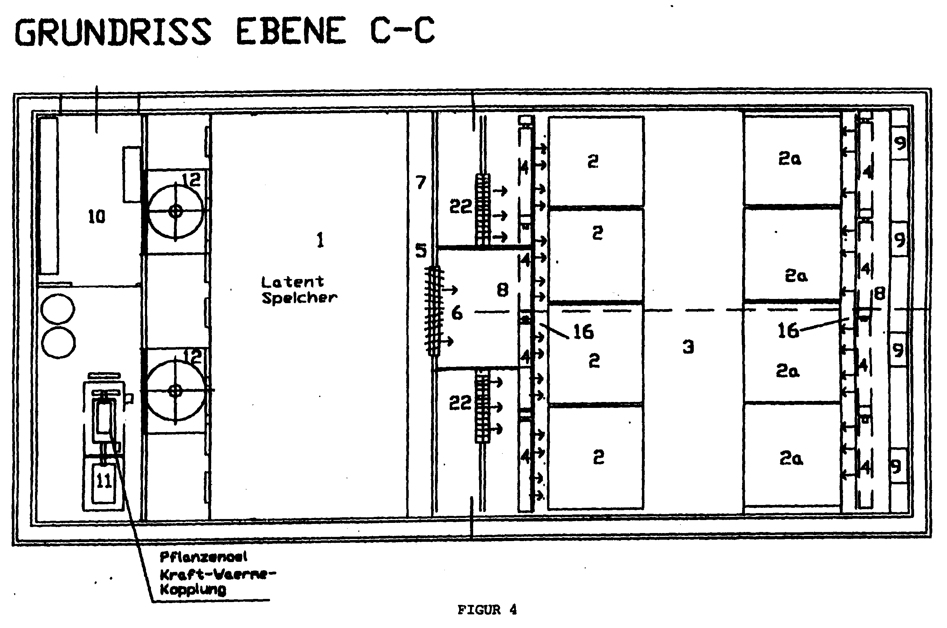

- Figur 4 eine Aufsicht auf die erfindungsgemäße Anlage im unteren Bereich; und

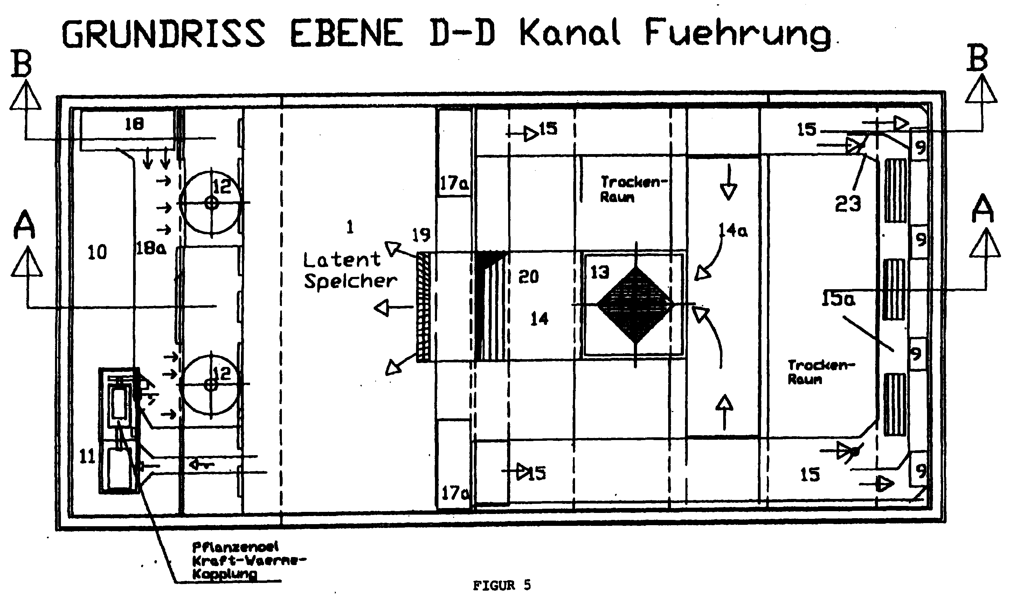

- Figur 5 eine Aufsicht auf die erfindungsgemäße Anlage im Bereich der Wärmerückgewinnungs-Einrichtung und Entfeuchtungs-Einrichtung, d. h. im oberen Bereich.

Mit der wie nachfolgend beschrieben aufgebauten Anlage wird in einem ersten Schritt Energie gewonnen durch eine oder mehrere Einrichtung(en) 11, 42 zur Gewinnung von Energie zum Trocknen. Je nach Auslegung der Gesamtanlage kann eine derartige Einrichtung oder können mehrere derartige Einrichtungen (auch verschiedenen Typs) verwendet werden. Grundsätzlich ist für den Zweck der Gewinnung der zum Trocknen der wärmeempfindlichen Güter erforderlichen Energie ohne Beschränkung jede Energieerzeugungs-Einrichtung verwendbar. Bevorzugt wird jedoch unter Berücksichtigung des Ziels der ökonomischen und gleichzeitig ökologischen Energiegewinnung eine Einrichtung, mit der Energie aus umweltfreundlichen Energiequellen gewonnen werden kann. Dies können beispielsweise eine Solaranlage, eine Windkraft-Anlage, ein Motor, der mit regenerierbarem Treibstoff wie beispielsweise Pflanzenöl (z. B. Raps-Öl) betrieben wird, eine Gäranlage, mit der allweil anfallende Pflanzenabfälle fermentiert werden können und deren Gärgase dann verbrannt werden, usw., sein. Die Energiegewinnung auf diesem Weg ist deswegen besonders vorteilhaft, weil damit herkömmliche Energieträger zur Energiegewinnung vollständig geschont werden können und die verwendeten Energieträger entweder regenerierbar sind (Pflanzenöle wie beispielsweise Raps-Öl) oder in natürlicher Weise zur Verfügung stehen (Sonne, Wind). Die Wahl der jeweiligen Anlage zur Energiegewinnung ist dem Fachmann in Abstimmung mit den örtlichen Gegebenheiten überlassen, insbesondere den klimatischen Gegebenheiten und der Verfügbarkeit der denkbaren Energieträger. So kann der ökonomische mit dem ökologischen Aspekt verbunden werden ( 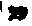 Energie-Kreislauf-Wirtschaft").

Erfindungsgemäß sind besonders bevorzugte Beispiele der Einrichtung zum Gewinnen von Energie zum Trocknen Sonnenkollektoren, Luftkollektoren (Solar-Luft-Kollektoren) und Pflanzenöl-betriebene Motoren oder Kombinationen der genannten Einrichtungen.

Für eine Verwendung von Motoren, besonders bevorzugt Pflanzenöl-Motoren, werden erfindungsgemäß bevorzugt Einrichtungen vorgesehen, mit denen verschiedene Anteile der gewonnen Energie für die Trocknung genutzt werden können. Diese schließen die durch den Motor direkt gewonnene Energie, die Energie des Motor-Abgases, die Energie des Kühlwassers für den Motor und die abgestrahlte (Wärme-) Energie des laufenden Motors ein. Diese umfaßt auch die Strahlungswärme des durch den Motor bevorzugt betriebenen Generators; der Generator wird so gekühlt, und diese Energiekomponente kann auch für Fremdzwecke genutzt werden, beispielsweise für Heizzwecke. Durch geeignete, dem Fachmann an sich bekannte Einrichtungen (luftdurchstömte Motor-Kapselung zur Abführung der abgestrahlten Wärme und deren Einspeisung in den Energiekreislauf, Wärmetauscher Abgas/Luft zur Übernahme der Abgas-Wärme in den Energiekreislauf, Wärmetauscher Kühlflüssigkeit/Luft zur Übernahme der Kühlflüssigkeits-Wärme in den Energiekreislaut) läßt sich die erzeugte Energie mit weit größerem Wirkungsgrad nutzen als nach dem Stand der Technik denkbar.

Die gewonnene bzw. die auf den vorstehend beschriebenen Wegen übernommene Wärmeenergie wird auf einen für den Trockenvorgang geeigneten fluiden Träger übertragen. Dieser kann Luft sein, was erfindungsgemäß bevorzugt ist, da diese regelmäßig in ausreichender Menge und Qualität zur Verfügung steht oder (beispielsweise durch Filtration, Konditionierung wie beispielsweise Feuchtigkeitsentzug etc.) verfügbar gemacht werden kann. In speziellen, durch die zu trocknenden Güter vorgegebenen Fällen kann jedoch auch ein anderer (meist, aber nicht notwendigerweise, gasförmiger) Träger verwendet werden, beispielsweise ein Gas, mit dem ein Reifungsprozeß gefördert, ein Verderbnisprozeß oder der Befall des zu trocknenden Guts durch Schädlinge (wie beispielsweise Schimmelpilz) verhindert oder ein Trocknungsprozeß beschleunigt werden kann. Beispiele für derartige Gase sind Edelgase (Helium, Argon), unter den gewählten Bedingungen nicht reagierende Gase (Stickstoff, Wasserstoff) oder auch andere Gase (Sauerstoff).

Das Trockenmedium kann in einer besonderen und erfindungsgemäß bevorzugten Ausführungsform auch mit Stoffen beaufschlagt sein, die dem zu trocknenden Gut ein bestimmtes Aroma verleihen. Beispielsweise ist es beim Trocknen von Schinken denkbar, daß natürliche oder künstliche Aromastoffe in das gasförmige Trockenmedium eingespeist werden, so daß sie mit dem zu trocknenden Gut in Kontakt kommen und diesem ein bestimmtes Aroma verleihen. Es kann sich dabei um Gewürz-Aromen, Rauch-Aromen oder auch andere Aromen nach den an sich auf den einzelnen Feldern dem Fachmann bekannten Erfordernissen handeln.

Die erfindungsgemäße Anlage kann grundsätzlich mit einem geschlossenen Energieträger-System, beispielsweise einem geschlossenen Luftsystem, arbeiten. Dies bedeutet, daß der Energieträger, bevorzugt die Luft, in einem geschlossenen Kreislauf strömt und von der Übernahme der Energie aus der Energie-Erzeugung bis zum Trocknungsvorgang immer dieselbe bleibt; nach dem Vorgang des Trocknens des/der wärmeempfindlichen Gutes/Güter von Wasser befreit wird und/oder ihr verbliebener Energie-Inhalt über Wärmetauscher dem Energiekreislauf der Anlage wieder zugeführt wird und der gekühlte Energieträger, bevorzugt die gekühlte Luft, wieder einem neuen Kreislauf Erwärmen - Trocknen - Wasserabgabe(Kühlen usw. zugeführt wird. Alternativ (und im Sinne eines möglichst Energieverlustfreien Betriebs der Anlage bevorzugt) kann der noch warme, von dem aus dem Trocknungsprozeß stammenden Wasser befreite Energieträger, bevorzugt die wieder trokkene Luft, direkt wieder in den Kreislauf eingespeist werden. Dadurch wird in vorteilhafter Weise ein Austausch der in dem Energieträger enthaltenen Wärmeenergie, der regelmäßig zu Verlusten führt, vermieden.

Die geschlossene Führung des Energieträgers hat einen weiteren Vorteil: In Fällen, in denen mit dem Trocknungsvorgang das Abgang von Gerüchen verbunden ist, kann die Belastung der Umgebung der Trocknungsanlage mit Gerüchen vermieden werden. Dies ist - wie dem Fachmann in diesem technischen Gebiet bekannt ist - natürlich auch bei offener Führung des Energieträgers dann möglich, wenn bei Abgabe des Energieträgers in die Umgebung, beispielsweise beim 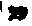 Auslüften" der Anlage, der Energieträger wie die Luft durch ein geeignetes Filter geführt wird.

In gleicher Weise ist es jedoch auch möglich, den umlaufenden Energieträger, bevorzugt Luft, bei jedem Umlauf zumindest partiell auszutauschen ( 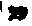 Mischluft-Betrieb"). Dazu ist in den Strömungswegen zwischen den einzelnen Anlagenteilen, beispielsweise vor den Anlagenteilen zur Konditionierung des Energieträgers für einen erneuten Vorgang der Aufnahme von gewonnener Energie aus der Einrichtung zur Energie-Erzeugung oder aus einer Einrichtung zur Speicherung der gewonnenen Energie, eine Einrichtung oder mehrere Einrichtungen vorgesehen, mit der/denen Energieträger an die Außenumgebung abgegeben und/oder Energieträger von der Außenumgebung in das Umlaufsystem eingespeist werden kann. Diese Einrichtung kann/können in bevorzugten Ausführungsformen der erfindungsgemäßen Anlage Zuluft-Öffnungen oder -Klappen und gegebenenfalls dazugehörige Filter- oder Konditionier-Einrichtungen für den Energieträger bzw. die Luft sein.

Der mit der Energie beaufschlagte fluide Träger, beispielsweise die Luft, strömt durch die Anlage zur Gewinnung von Energie zum Trocknen und nimmt dabei die gewonnene (Wärme-) Energie auf. Dabei ist es möglich, die erfindungsgemäße Anlage so auszulegen, daß sie weitestmöglich die Energie auf den fluiden Träger überträgt und dabei einen energiereichen, beispielsweise einen sehr heißen, fluiden Träger erzeugt. Dieser kann später mit bei niedrigerer Temperatur befindlichem Träger gemischt und so ein fluides Medium einer Temperatur geschaffen werden, die für eine schonende Trocknung wärmeempfindlicher Güter geeignet ist. In gleicher Weise ist es auch möglich, einen fluiden Träger zu erzeugen, der (beispielsweise aufgrund hoher Durchstrom-Mengen) nur eine geringere Temperatur hat und damit unmittelbar für den Kontakt mit zu trocknenden, wärmeempfindlichen Gütern geeignet ist. Die erste Ausführungsform ist insbesondere dann bevorzugt, wenn der fluide, energiebeladene Träger, beispielsweise die heiße Luft, zuerst eine Einrichtung zur Speicherung und zur Abgabe der gewonnen Energie zum Trocknen durchströmt, bevor er/sie mit zu trocknenden, wärmeempfindlichen Gütern in Kontakt kommt.

Die erfindungsgemäße Anlage zum Trocknen wärmeempfindlicher Güter weist als eine essentielle Einrichtung eine oder mehrere Einrichtung(en) 1 zur Speicherung und zur Abgabe der gewonnenen Energie zum Trocknen auf. Der Vorteil des Vorhandenseins einer oder mehrerer derartiger Einrichtungen ist, daß der Betrieb der Anlage nicht von der tatsächlichen Energiegewinnung anhängig ist, sondern Energie zu günstigen Zeiten, beispielsweise zur Tageszeit, wenn die Sonnenstrahlung zur Energiegewinnung in Sonnenkollektoren oder Solaranlagen genutzt werden kann, oder zu Zeiten, wenn Windenergie aus dem Betrieb einer Windkraft-Anlage verwendet werden kann, gewonnen wird und mittels eines geeigneten fluiden Mediums einer Speicher-Einrichtung zugeführt werden kann und die gespeicherte Energie später sukzessive mittels des fluiden Mediums 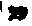 abgerufen" und in den Trockenvorgang eingespeist werden kann. Natürlich kann die erfindungsgemäße Anlage eine derartige Speicher-Einrichtung 1 oder mehrere derartige Speicher-Einrichtungen 1 aufweisen; letzteres ist deswegen bevorzugt, weil die Speichereinrichtungen dann im Wechselbetrieb betrieben werden können, d. h. eine Speichereinrichtung wird zur Aufnahme erzeugter Energie mit heißem fluiden Energieträger-Medium beschickt und so aufgeheizt, während eine andere mit kaltem fluiden Energieträger-Medium beschickt wird, das vor Kontakt mit dem zu trocknenden Gut erwärmt wird. Ein weiterer Vorteil des Betriebs der erfindungsgemäßen Anlage mit mehreren Speicher-Einrichtungen 1, 1 besteht darin, daß letztere u. U. auch dazu verwendet werden können, das fluide Energieträger-Medium hinsichtlich weiterer, über die Temperatur hinausgehender Parameter zu konditionieren, beispielsweise hinsichtlich der darin enthaltenen Feuchtigkeit (siehe die nachfolgende Beschreibung geeigneter Materialien für die Energiespeicher-Einrichtung 1). In diesem Fall kann es von besonderem Vorteil sein, wenn eine Energiespeicher-Einrichtung 1 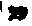 trocken" ist und von dem fluiden Energieträger-Medium durchströmt werden kann, um dieses aufzuheizen und dann in den Trockengang zu leiten. Währenddessen wird die oder eine anderere Energiespeicher-Einrichtung 1, in der sich Feuchtigkeit gesammelt hat, 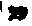 getrocknet", d. h. gespeicherte Feuchtigkeit wird abgezogen, beispielsweise dadurch, daß man die EnergiespeicherEinrichtung mit einem trocken konditionierten, gegebenenfalls sogar warmen fluiden Medium beschickt, um die gespeicherte Feuchtigkeit abzuführen. Dies könnte in ökologisch sinnvoller Weise z. B. dann geschehen, wenn während Sonnenschein-Phasen eine Solarenergie-Heizanlage überschüssige Energie liefert und diese im Speicher 1 gespeichert werden soll.

Derartige Einrichtungen zur Speicherung und Abgabe der gewonnenen Energie zum Trocknen können in bevorzugten Ausführungsformen der Erfindung Plattenspeicher sein, beispielsweise solche aus Metall mit guter Wärmeleitfähigkeit. Sie können in anderen bevorzugten Ausführungsformen auch Flüssigkeitsspeicher sein, die mit einer oder mehreren Flüssigkeit(en) mit gutem Wärmespeicher-Vermögen gefüllt sind. Andere bevorzugte Ausführungsformen betreffen chemische Speicher, in denen Salze oder Graphit als eigentliche Speichermedien verwendet werden. Weitere erfindungsgemäß besonders bevorzugte Ausführungsformen umfassen Feststoff-Speicher wie beispielsweise Natursteine als Einrichtungen 1 zur Speicherung und Abgabe der gewonnenen Energie zum Trocknen. Letztere sind deswegen besonders bevorzugt, weil sie ein hohes Wärmespeicher-Vermögen haben und zusätzlich auf natürliche Weise dem fluiden Träger Feuchtigkeit entziehen können, damit letzterer möglichst optimal für den Trocknungsprozeß konditioniert ist.

Es entspricht einer besonders bevorzugten Ausführungsform der Erfindung, in einer Anlage zum Trocknen wärmeempfindlicher Güter Solar-Luft-Kollektoren 42 mit einem Feststoff-Speicher 1 zu einem geschlossenen Kreislauf zu koppeln. Dieser schafft eine optimale Verbindung zwischen umweltgerechter Erzeugung von Energie zum Trocknen und deren Speicherung bzw. deren Abgabe an einen fluiden Energieträger mit hohem Wirkungsgrad.

Wie bereits oben mehrfach angegeben, wird der fluide Energieträger in einem geschlossenen oder offenen Kreislauf geführt. Dazu weist die Anlage zum Trocknen wärmeempfindlicher Güter gemäß der Erfindung mehrere Einrichtungen:4, 12a zum Bewegen des Mediums bzw. Trägers auf, mit dem die gewonnene Energie zum Trocknen transportiert werden kann. Diese Einrichtungen sind in bevorzugten Ausführungsformen der Anlage Ventilatoren oder Pumpen, bevorzugt Ventilatoren, mit denen der Energieträger, beispielsweise die Luft, durch die Strömungswege der Anlage getrieben bzw. gepumpt werden kann. Bevorzugt ist eine Anlage, in der mehrere Ventilator(en) den Energieträger durch die Strömungswege der Anlage treiben.

Dem Fachmann auf diesem Gebiet wird klar, daß weitere Einrichtungen zum Bewegen des fluiden Energietransport-Mediums in der Anlage vorhanden sein können. So kann beispielsweise ein Teil dieses Mediums, beispielsweise ein Teil der verwendeten Luft, von einer oder mehreren Pumpe(n) aus dem geschlossenen Strömungs-Kreislauf abgepumpt und durch den Druckunterschied eine Triebkraft für den Transport des flüssigen Mediums geschaffen werden. In gleicher Weise kann dem geschlossenen Kreislauf mittels geeigneter Einrichtungen, beispielsweise mittels einer oder mehrerer Pumpe(n), frisches Energietransport-Medium zugeführt werden. Auch durch den Überdruck wird eine Triebkraft für den Transport des Mediums geschaffen. Andere Einrichtungen sind ebenfalls denkbar und dem Fachmann auf diesem Gebiet geläufig.

Die erfindungsgemäße Anlage umfaßt weiter mehrere separate Einrichtungen 2, 2a zur Aufnahme der zu trocknenden wärmeempfindlichen Güter. Diese müssen grundsätzlich so beschaffen sein, wie es der jeweilige Trockenvorgang bzw. die jeweiligen zu trocknenden Guter erfordern, und können eine Vielzahl von Formen und Anordnungen haben. In bevorzugten Ausführungsformen sind diese Aufnahme-Einrichtungen so beschaffen, daß sie die jeweiligen zu trocknenden Güter sicher aufnehmen können, ohne sie beim Antransport und Abtransport zu verlieren, jedoch andererseits dem für die Trocknung verwendeten fluiden Medium einen möglichst guten Zugang zu dem zu trocknenden Gut zu verschaffen.

Durch die mehreren separaten Einrichtungen zur Aufnahme können verschiedene Arten von Gütern gleichzeitig getrocknet werden, bei denen unterschiedliche Trocknungsbedingungen notwendig sind. Innerhalb der separaten Kammern können somit unterschiedliche Luftgeschwindigkeiten, Luftfeuchtigkeiten, Lufttemperaturen und Luftmengen eingestellt werden, was vorzugsweise durch separate Einrichtungen (4, 12a) zum Bewegen des Mediums erfolgt, die jeweils einer der separaten Einrichtungen (2, 2a) zur Aufnahme der zu trocknenden wärmeempfindlichen Güter vorgelagert sind.

Besonders haben sich beispielsweise für zu trocknende Pflanzen oder Pflanzenteile Trokkenkästen bewährt (und sind daher bevorzugt), in denen das trocknende fluide Medium das zu trocknende Gut, also die Pflanzen(-teile), möglichst so anströmen kann, daß keine Zonen unzureichender Trocknung entstehen. So können Trockenkästen aus unterschiedlichen Materialien, beispielsweise aus Metall oder Kunststoff, verwendet werden, die einen Boden mit

Löchern und vier Seitenwände aufweisen. Dadurch kann das trocknende fluide Medium die das zu trocknende Gut enthaltenden Kästen von oben nach unten oder von unten nach oben anströmen, gesehen in der Richtung, in der die Kästen während des Trockenvorgangs angeordnet sind. Bevorzugt sind erfindungsgemäße Anlagen, in denen die Trockenkästen aus Metall sind. Dieses Metall ist selbstverständlich ein Metall, das den Bedingungen des Trokkenvorgangs und den Inhaltsstoffen der zu trocknenden Güter ohne Korrosion oder andere nachteilige Erscheinungen standhalten kann. In vorteilhafter Weise erwärmt sich auch der Trockenkasten während des Trockenvorgangs, was eine gleichmäßige Trocknung des darin enthaltenen Gutes zur Folge hat, die sich vorteilhaft auf das Ergebnis des Trockenvorgangs auswirkt.

Weiter ist es erfindungsgemäß bevorzugt, daß der Trockenkasten in seinem Boden Löcher unterschiedlichen Durchmessers aufweist, besonders bevorzugt Löcher, die in der Mitte des Kastenbodens größer sind als am Rand des Kastenbodens. Insbesondere in Anlagen mit hohen Schüttungen, in denen das zu trocknende Gut in den Kästen von unten mit dem fluiden Medium angeströmt wird, führt dies zu dem Ergebnis eines einheitlichen, gleichmaßigen Trockenvorgangs. Das fluide Medium trocknet nach Durchströmen der kleinen Löcher das zu trocknende Gut am Kastenrand, der durch den Kontakt mit dem fluiden Trockenmedium selbst warm ist, genauso gut wie das zu trocknende Gut in der Kastenmitte, die (wegen des Fehlens eines nahen warmen Kastenrandes) mit mehr warmem, fluidem Trockenmedium beaufschlagt werden muß, das durch, die größeren Löcher besser einströmen kann. So wird die im Stand der Technik immer wieder beobachtete unzureichende Trocknung in der Mitte des Kastens vermieden, und es wird ein einheitlich zufriendenstellendes Trockenergebnis erreicht.

Die erfindungsgemäße Anlage umfaßt weiter als essentiellen Teil der Anlage eine oder mehrere Einrichtung(en) 12, 13 zum Entfernen der Feuchtigkeit aus dem Energie-Transportmedium und/oder zur Rückgewinnung der in dem Energie-Transportmedium enthaltenen Restenergie. Es kann eine solche Einrichtung oder es können mehrere derartiger Einrichtungen verwendet werden. In gleicher Weise ist es möglich, eine oder mehrere Einrichtung(en) vorzusehen, in denen die Entfernung der Feuchtigkeit getrennt von der Rückgewinnung der Energie erreicht, wird. Denkbar ist in einer weiteren bevorzugten Ausführungsform der Anlage, daß nur die Einrichtung zur Entfernung der Feuchtigkeit betätigt bzw. von dem Energieträger passiert wird, wonach dieser - in getrocknetem Zustand - ohne Wärmetausch erneut in den Trockenkreislauf eingespeist wird. Diese Ausführungsform kann unter bestimmten Voraussetzungen besonders vorteilhaft und damit besonders bevorzugt sein, da jeder Energieaustausch mit Energieverlusten verbunden ist, die möglichst vermieden werden sollen.

In einer bevorzugten Ausführungsform der Anlage findet/finden sich die Einrichtung(en) 13 zum Entfernen der Feuchtigkeit aus dem Energieträger, beispielsweise aus der Luft, im Strömungsweg der Luft stromabwärts nach den Einrichtungen zur Aufnahme der zu trocknenden wärmeempfindlichen Güter. Die Luft, die von den zu trocknenden Gütern, beispielsweise von den Pflanzen oder Pflanzenteilen, Feuchtigkeit aufgenommen und diese damit zumindest ein Stück weiter getrocknet hat, passiert die Einrichtung(en) 13 zur Entfernung der Feuchtigkeit also kurz nach dem Trockenvorgang.

Die genannten Einrichtungen 12, 13 können Kondensatoren 13 zum Kühlen des fluiden Energieträgers unter den Taupunkt sein. Dabei wird nicht nur die Energie des Energieträgers, beispielsweise die Wärme der Luft, zu einem überwiegenden Teil zurückgewonnen, sondern auch erreicht, daß sich Feuchtigkeitskomponenten am Kondensator niederschlagen, da die Luft bei der niedrigeren Temperatur weniger Feuchtigkeit speichern bzw. mit sich fuhren kann. Diese Einrichtung vereinigt also die Vorgänge der Trocknung des Energieträgers bzw. der Luft mit dem Schritt der Rückgewinnung der Energie.

Anderen bevorzugten Ausführungsformen der Anlage entsprechend kann auch eine Einrichtung vorgesehen sein, in der die Feuchtigkeit aus dem Energieträger entfernt wird, indem dieser ein Trockenmedium passiert, das die Feuchtigkeit adsorbiert bzw. absorbiert

Weiter ist es erfindungsgemäß möglich, vorzusehen, daß dem fluiden Energieträger, beispielsweise der Luft, die die Feuchtigkeit des Vorgangs des Trocknens der zu trocknenden Güter noch enthält, mehr oder weniger vollständig trockener Energieträger, also beispielsweise vollständig trockene Luft zugemischt wird und dieser damit für einen neuen Trockenvorgang konditioniert wird. Dies ist insbesondere dann sinnvoll, wenn die Anlage im sog. 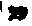 Mischluft-Betrieb^{"} betrieben wird.

In einer anderen, unter bestimmten Bedingungen ebenfalls bevorzugten Ausführungsform der Anlage kann der Energieträger bzw. die Luft nach dem separaten Trocknen unmittelbar dem Kreislauf wieder zugeführt werden. Gleichfalls ist es möglich, an geeigneten Wärmetauschern einen Energieaustausch vorzunehmen und die verbrauchte Luft aus dem System auszuschleusen, während an anderen, oben bereits beschriebenen Stellen der Anlage frische trockene und kühle oder sogar bereits durch Wärmeaustausch erwärmte Luft eingespeist wird.

Insgesamt stellt sich die erfindungsgemäße Anlage als besonders vorteilhaft gegenüber dem bekannten Stand der Technik dar. Dies ist zurückzuführen auf die vorteilhafte Kombination der Merkmale der Anlage, nämlich daß eine ökologisch vernünftige und insgesamt aufgrund fortschrittlicher Technologie auch ökonomisch realisierbare Gewinnung von Energie mit einer weitgehend verlustfreien Speicherung dieser Energie für die Zeit des Betriebs der Anlage verbunden wird, in dem eine Gewinnung von Energie nicht sinnvoll oder nicht möglich (Nacht bei Solaranlagen) ist. Weiter wird mit der Führung des fluiden Energieträgers durch die Energiespeicher und über bzw. durch das zu trocknende Gut eine effiziente Trocknung erreicht. Es treten keine Produktverluste aufgrund zu hoher Temperaturen ein, und die zu trocknenden wärmeempfindlichen Güter können später an anderem Ort effizient und ohne Verlust oder Abbau irgendwelcher Inhaltsstoffe weiterverarbeitet werden. Die erfindungsgemäße Anlage erlaubt zudem eine weitgehende Nutzung der eingesetzten Energie aufgrund der energieverlust-freien Leitung des Energieträgers zwischen den Anlagenteilen.

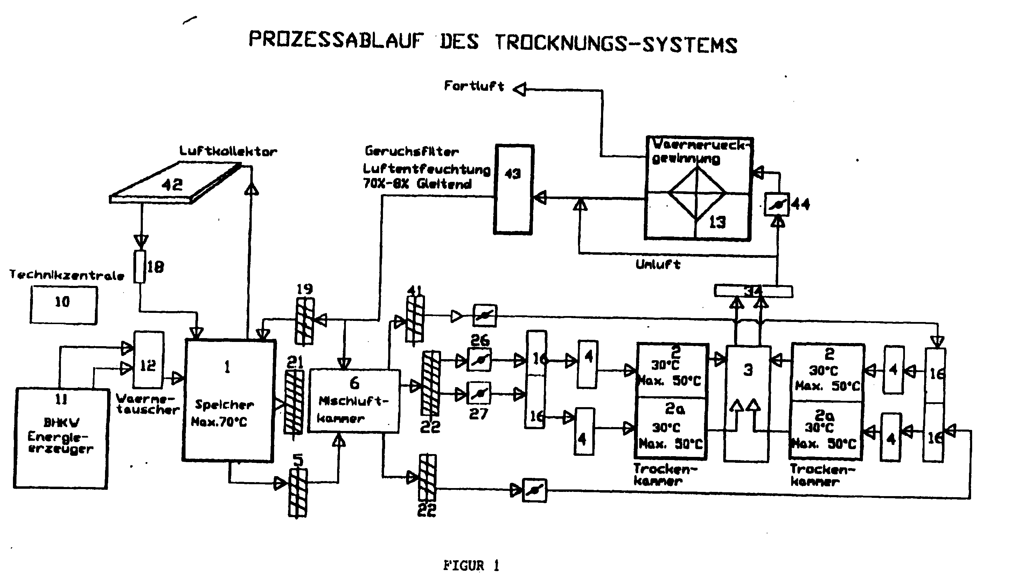

Für einen Fachmann auf dein Gebiet der Trockenanlagen ist klar, daß in einer bevorzugten Ausführungform der Erfindung die Anlage zum Trocknen wärmeempfindlicher Güter mechanische Einrichtungen zum Steuern des Stroms der fluiden Mediums, beispielsweise des Luftstroms, umfassen kann. Derartige mechanische Einrichtungen können beispielsweise Einrichtungen zum Lenken, Reduzieren oder Blockieren des fluiden Mediums wie z. B. der Luft sein, die an solchen Stellen der Anlage angeordnet sind, wo diese Funktionen von Bedeutung sind. Beispiele für solche Einrichtungen sind Klappen, Blenden. Jalousien oder Türen, die mechanisch betätigt werden können; diese können beispielsweise mit einer elektronischen Steuerung betätigt sein, die von Sensoren ausgelöst und gegebenenfalls zentral betätigt wird. In der erfindungsgemäßen Anlage finden sich derartige Einrichtungen beispielsweise als Einrichtung 19 zur Steuerung des Fluidstroms zwischen einer Einrichtung 43 zur Entfeuchtung des fluiden Mediums, z. B. der Luft, und einer Einrichtung 6 zum Mischen des fluiden Mediums bzw. dem Energiespeicher 1: Wenn das fluide Medium (z. B. die Luft) nach dem Trockenvorgang entfeuchtet wurde, kann es/sie - je nach Temperatur und Feuchtigkeitsgehalt (und gegebenenfalls auch anderen konditionierbaren Parametern) - zuerst dem Energiespeicher 1 zugeführt werden, beispielsweise um erwärmt zu werden und/oder hinsichtlich eines oder mebrerer anderer Parameter (z. B. Feuchtigkeitsgehalt in dem Fall, in dem auch das Material des Energiespeichers zur Einstellung des Parameters beitragen kann) konditioniert zu werden. In diesem Fall ist die in Figur 1 mit 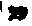 19" bezeichnete Einrichtung zum Lenken des fluiden Mediums geöffnet. Befindet sich hingegen (beispielsweise erkennbar durch einen im Strömungsweg zwischen der Einrichtung 43 und dem Energiespeicher 1 angeordneten Temperatursensor) das fluide Medium bei einer für einen weiteren Trockenvorgang ausreichend hohen Temperatur, kann die Einrichtung 19 zum Lenken des fluiden Mediums geschlossen werden, und das fluide Medium strömt direkt in die Einrichtung 6 zum Mischen des fluiden Mediums, z. B. eine Luft-Mischkammer. Andererseits kann in dem letztgenannten Fall fluides Medium nach Passieren des Energiespeichers 1 auch direkt in die Einrichtung 6 zum Mischen des fluiden Mediums strömen, beispielsweise dann, wenn die Einrichtungen 5 und 21 zum Lenken des fluiden Mediums geöffnet sind. In der Einrichtung 6 kann dann beispielsweise abgekühltes fluides Medium (aus dem vorangehenden Trocknungsvorgang über die Einrichtung 43 zur Trocknung des fluiden

Mediums zuströmend, bei geschlossener Einrichtung 19) mit trockenem, bei höherer Temperatur befindlichen, direkt aus dem Energiespeicher 1 kommenden fluiden Medium gemischt werden. Wie leicht nachzuvollziehen ist, lassen sich durch die vielfältigen Möglichkeiten der Steuerung allem in diesem Fall beliebige Parameter bequem einstellen, was einer der Vorteile der erfindungsgemäßen Anlage ist.

In ähnlicher Weise läßt sich auch der Strom des fluiden Mediums, beispielsweise der Luft, zwischen der Einrichtung 6 zum Mischen des fluiden Mediums und den Trockenkammern 2, 2a auf vielfältige Weise lenken, reduzieren oder blockieren. Aus Figur sind beispielsweise Einrichtungen 41, 22 und 16 zum Lenken, Reduzieren oder Blockieren des Fluidstroms ersichtlich. Einrichtungen 4 zum Bewegen des fluiden Mediums, beispielsweise Ventilatoren, sorgen für den nötigen Strom des fluiden Mediums.

Eine ähnliche Funktion wie die Einrichtung 19 hat die Einrichtung 44: Auch sie steuert den Strom des fluiden Mediums dann, wenn sie geöffnet ist, zumindest zum Teil in die Einrichtung 13 zur Wärmerückgewinnung, wohingegen sie dann, wenn sie geschlossen ist, den Fluidstrom an dieser Einrichtung 13 vorbei und direkt zur Einrichtung 43 zur Entfeuchtung des fluiden Mediums führt.

Weiter kennt der Fachmann für die bekannten Zwecke Filter, Temperatursensoren, Feuchtigkeitssensoren, und damit verbundene (möglicherweise auch elektronische) Einrichtungen, die bevorzugterweise in der erfindungsgemäßen Anlage für eine reibungslose Funktion aller anderen Einrichtungen beitragen, an sich aus dem Stand der Technik für dieselben Zwecke bekannt sind und daher keiner weiteren detaillierten Beschreibung bedürfen.

Die Erfindung betrifft - wie bereits oben angesprochen - auch ein Verfahren zum Trocknen wärmeempfindlicher Güter. Insbesondere betrifft die Erfindung ein solches Verfahren unter Verwendung der o. g. Anlage, ist jedoch nicht auf die Anwendung oder Verwendung der oben im einzelnen beschriebenen Anlage beschränkt.

Das erfindungsgemäße Verfahren umfaßt die Schritte, daß man
(a) ein fluides Energie-Transportmedium unter Anwendung ressourcenschonender Energieträger erwärmt;
(b) das erwärmte fluide Energie-Transportmedium durch einen Energiespeicher 1 leitet und dort einen Gleichgewichtszustand zwischen fluidem Energie-Transportmedium und Energiespeicher 1 einstellt, dessen physikalische Parameter unterhalb kritischer Werte liegen, insbesondere dessen Temperatur unterhalb der kritischen Temperatur liegt;
(c) das so konditionierte fluide Energie-Transportmedium nach Passieren einer Einrichtung 6 zum Mischen des fluiden Energie-Transportmediums mittels mehrerer Einrichtungen 4, 12a zum Bewegen des fluiden Energie-Transportmediums mehreren Einrichtungen 2, 2a zur Aufnahme zu trocknender wärmeempfindlicher Güter Separat zuleitet, die mit wärmeempfindlichen Gütern bestückt sind und dort einen Gleichgewichtszustand zwischen fluidem Energie-Transportmedium und den zu trocknenden wärmeempfindlichen Gütern herstellt;
(d) das fluide Energie-Transportmedium unter Zurücklassen wenigstens teilweise getrockneter wärmeempfindlicher Güter aus den Einrichtungen 2, 2a zur Aufnahme wärmeempfindlicher Güter abzieht und einer oder mehreren Einrichtungen 12, 13, 43 zur Entfernung der Feuchtigkeit aus dem fluiden Energie-Transportmedium und gegebenenfalls zur Rückgewinnung der in dem fluiden Energie-Transportmedium enthaltenen Restenergie zuführt; und anschließend
(e) das fluide Energie-Transportmedium entweder dem Energiespeicher 1 zur Einstellung eines neuen Gleichgewichtszustandes zwischen fluidem Energie-Transportmedium und Energiespeicher 1 oder der Einrichtung 6 zum Mischen des fluiden Energie-Transportmediums für einen neuen Trockenkreislauf zuleitet.

Im Rahmen der vorliegenden Erfindung werden mit dem Verfahren wärmeempfindliche Güter getrocknet. Dies können in bevorzugten Ausführungsformen Pflanzen, Pflanzenteile, Lebensmittel (wie Fleisch oder Käse) oder auch andere Güter sein, ohne daß dies Beschränkungen unterworfen ist, die aus dem erfindungsgemäßen Verfahren resultieren. Die Trocknung muß aus Gründen der Erhaltung der Qualität, insbesondere der Inhaltsstoffe der genannten Güter, beispielsweise der aus den Pflanzen oder Pflanzenteilen gewinnbaren Pflanzen-Inhaltsstoffe, unter schonenden Bedingungen durchgeführt werden, insbesondere unter schonenden Temperaturbedingungen. Oberhalb einer (für jedes der zu behandelnden wärmeempfindlichen Güter speziellen) kritischen Temperatur tritt eine Verschlechterung der Qualität oder sogar ein thermischer Abbau bzw. eine thermische Veränderung der Inhaltsstoffe ein. Um dies zu verhindern, soll erfindungsgemäß die Temperatur der Behandlung immer unterhalb der kritischen Temperatur liegen.

In einer bevorzugte Ausführungsform des Verfahrens verwendet man als fluides Energie-Transportmedium oder fluides Medium ein Gas oder eine Gasmischung. Dies ist besonders bevorzugt, weil in diesem Fall größere Mengen des fluiden Mediums einfach und effizient durch die Anlage geführt werden können und damit ein schonender, nichtsdestoweniger jedoch effizienter Trocknungsprozeß erreicht wird.

Weiter bevorzugt werden Gase oder Gasmischungen verwendet, die gewählt sind aus der Gruppe Luft, Edelgase wie beispielsweise Hellum oder Argon, wenig reaktiven Gasen wie Stickstoff oder Wasserstoff oder auch Sauerstoff. Es sind jedoch auch andere Gase verwendbar. Bevorzugt wird Luft oder eine lufthaltige Gasmischung verwendet, da Luft überall verfügbar ist und durch einfache Prozesse in der erforderlichen Reinheit und mit den erforderlichen Eigenschaften (Feuchtigkeitsgehalt usw.) zur Verfügung gestellt werden kann.

Erfindungsgemäß wird die Wärme - wie bereits oben beschrieben - unter Verwendung ressourcenschonender Energieträger hergestellt. Darunter werden allgemein Energieträger verstanden, die entweder in natürlicher Umgebung vorhanden sind und - für die Natur unschädlich - mittels geeigneter Anlagen in Energie umgewandelt werden können (Solarenergie, Solar-Luft-Kollektoren, Windenergie) oder die sich natürlich regenerieren, wie beispielsweise regenerierbare verbrennbare Stoffe wie Pflanzenöle, z. B. Rapsöl, oder durch natürliche Gärung von Pflanzen (-Teilen) gewinnbares Gärgas (z. B. Methan).

Erfindungsgemäß bevorzugt wird das fluide Energie-Transportmedium, bevorzugt die Luft, hinsichtlich bestimmter physikalischer Parameter konditioniert, beispielsweise hinsichtlich des Parameters 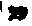 Temperatur". Andere Parameter sind denkbar, wie beispielsweise Druck oder Feuchtigkeit; die Temperaturkonditionierung ist erfindungsgemäß bevorzugt. Dies geschieht beispielsweise in der Einrichtung 6 zum Mischen des fluiden Mediums, beispielsweise in einer Mischkammer 6 zum Mischen von Luft. Das in dem Energiespeicher 1 erwärmte fluide Medium wird darin gegebenenfalls mit bereits im Kreislauf geführter Luft vermischt und anschließend den Einrichtungen 2, 2a zur Aufnahme der zu trocknenden wärmeempfindlichen Güter zugeführt. Die Triebkraft hierfür stammt von Einrichtungen 4, 12a zum Bewegen des fluiden Energie-Transportmediums, beispielsweise von Ventilatoren oder Pumpen. Die Einrichtungen 2, 2a sind mit zu trocknenden wärmeempfindlichen Gütern bestückt. Dies können die o. a. Güter sein, wobei es das erfindungsgemäße Verfahren erlaubt, nicht allein Güter nur eines Typs zu trocknen, sondern nebeneinander Güter unterschiedlicher Empfindlichkeit, unterschiedlicher Zusammensetzung, unterschiedlichen Trockengrades usw. zu trocknen, solange die kritische Temperatur des am meisten empfindlichen Typs von Gütern nicht überschritten wird.

Der eigentliche Trocknungsvorgang kann kontinuierlich oder batchweise durchgeführt werden. Bevorzugt ist die kontinuierliche Trocknung, d. h. es wird kontinuierlich fluides Energie-Transportmedium über die zu trocknenden Güter geführt und damit ein kontinuierlicher Wasserentzug sichergestellt. Grundsätzlich ist jedoch auch ein in mehreren Schritten ablaufender, bevorzugt in drei Schritten ablaufender Trocknungsprozeß möglich und dann, wenn die zu trocknenden Güter dies erfordern, bevorzugt.

Aus wirtschaftlichen Gründen ist es besonders bevorzugt, das fluide Energie-Transportmedium im Kreislauf zu führen. Dies ist empfehlenswert insbesondere dann, wenn sich im Lauf des Trocknungsvorgangs keine Verschlechterung der Qualität des fluiden Mediums einstellt und sich die beim Kontakt mit dem zu trocknenden Gut aufgenommene Feuchtigkeit weitgehend oder sogar vollständig wieder entfernen läßt. Diese Verfahrensweise ist besonders ökonomisch wegen der Wiederverwendbarkeit des fluiden Trocknungsmediums. Es wird auch erreicht, daß eventuell die Umwelt beeinträchtigende Gerüche aus der Anlage nicht ausgetragen werden.

In Fällen, in denen dies nicht zu befürchten ist, oder auch in Fällen, wo das fluide Energie-Transportmedium, beispielsweise Luft, in unbegrenzten Mengen zur Verfügung steht, kann auch bei jedem Zyklus ein Teil des fluiden Mediums aus dem Kreislauf abgezogen und die abgezogene Menge (oder auch eine geringfügig kleinere oder größere, wenn dies die Umstände erfordern oder erlauben) durch 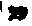 frisches^{"} fluides Medium ersetzt werden. Dieser (bei Luft) sogenannte 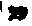 Mischluftbetrieb" hat den Vorteil einer nach den Gegebenheiten optimalen Konditionierbarkeit des fluiden Mediums und sorgt zudem für ein genau vorbestimmbares Trockenverhalten, was natürlich zu bevorzugen ist.

Nach Passieren der Einrichtungen 2, 2a zur Aufnahme wärmeempfindlicher Güter kann das fluide Energie-Transportmedium hinsichtlich verschiedener Parameter konditioniert werden. Besonders bevorzugt ist, das fluide Medium hinsichtlich des Feuchtigkeitsgehalts zu konditionieren. Dies ist besonders bevorzugt, weil damit die Effizienz der fluiden Mediums, im nächsten Zyklus zu trocknende Güter zu trocknen, erhalten bleibt. Beispielsweise kann dies dadurch geschehen, daß man das fluide Medium über ein Material leitet, das Feuchtigkeit adsorbiert oder absorbiert. Ein anderer Weg ist die Absenkung der Temperatur des fluiden Mediums unter den Taupunkt. Da dies jedoch ein Wiederaufheizen des fluiden Mediums vor dem nächsten Trockenschritt erfordert, ist diese Ausführungsform weniger bevorzugt.

Nach Entzug der Feuchtigkeit und/oder Rückgewinnung der in dem fluiden Medium enthaltenen Energie (letztere bringt praktisch eine Abkühlung des fluiden Mediums unter die für einen erneuten Trocknungsschritt geeignete Temperatur mit sich) wird das fluide Energie-Transportmedium entweder erneut dem Energiespeicher zugeleitet und dort erwärmt oder (beispielsweise in der Mischkammer 6) mit frischem heißem fluidem Energie-Transportmedium gemischt. Dabei muß über das Mischungsverhältnis eine Temperatur eingestellt werden die unter dem kritischen Wert liegt, will man eine Qualitätseinbuße bei den zu trocknenden wärmeempfindlichen Gütern vermeiden.

Der mit dem erfindungsgemäßen Verfahren erreichbare Trocknungsgrad der getrockneten Güter ist in keiner Weise beschränkt und richtet sich in erster Linie nach den Erfordernissen, die durch die zu trocknenden Güter vorgegeben werden. Beispielsweise werden Pflanzen oder Pflanzenteile, deren Inhaltsstoffe später gewonnen werden sollen, auf einen solchen Trocknungsgrad getrocknet, daß ihr Transport oder ihre Lagerung möglich ist, ohne daß dies die Ausbeute oder Qualität der Pflanzen-Inhaltsstoffe in irgendeiner Weise beeinträchtigt. Vorgaben für den Trocknungsgrad können sich auch aus der Wirtschaftlichkeit des Trocknungsvorgangs ergeben: Eine vollständige Trocknung mag im Einzelfall zur Erreichung des Ziels des Qualitätserhalts nicht erforderlich sein. Dies ist jedoch dem auf dem Gebiet der Trocknung wärmeempfindlicher Güter bewanderten .Fachmann bekannt; er kann den Trocknungsgrad daher auf die erforderlichen Umstände abstimmen.

Insgesamt zeigt sich, daß das erfindungsgemäße Verfahren zu einer für die zu trocknenden Güter weit schonenderen, breiter und universeller anwendbaren Trocknung führt. Es werden nicht nur die Aromen der zu trocknenden Güter geschont oder sogar gefördert; vielmehr können auch Trockmungsgrade ohne Qualitätaverlust erreicht werden. wie sie bei bisher gängigen Verfahren nicht zur Verfügung standen. Insbesondere ist das vorliegende Verfahren in einem Maßstab mit gutem Erfolg durchführbar, der eine industrielle Trocknung wärmeempfindlicher Güter besser als bisher möglich macht. Dabei werden regenerierbare bzw. natürliche Energiequellen in vorteilhafter Weise zur Energieerzeugung genutzt. Zudem zeigt die Verfahrensführung bzw. der Aufbau der Anlage gemäß der Erfindung, daß eine weit bessere Ausnutzung der Energie möglich ist, als dies im Stand der Technik möglich war.

Besonders im Fall der Trocknung empfindlicher Pflanzen bzw. Pflanzenteile zeigen sich die Vorteile des erfindungsgemäßen Verfahrens bzw. der erfindungsgemäßen Anlage: Die Pflanzen bzw. Pflanzenteile werden schonend getrocknet, wobei den Pflanzen nur Wasser entzogen wird, ohne die Zusammensetzung der Pflanzen-Inhaltsstoffe in nachteiliger Weise zu verändern. Dies ist von besonderem Vorteil im Fall von Pflanzen (-Teilen), aus denen später durch Extraktion Inhaltsstoffe gewonnen werden sollen, die sich nach den bisherigen Erfahrungen bereits bei geringer Änderung der natürlichen Umgebung, wie sie ein Trocknungsvorgang regelmäßig darstellt, verändern, beispielsweise durch Zersetzung, Abbau, Oxidation, Umlagerung usw..

## Patentansprüche

1. Anlage zum Trocknen wärmeempfindlicher Güter mit mindestens einer Einrichtung (11,42) zur Gewinnung von Energie zum Trocknen, mindestens einer Einrichtung (4, 12a) zum Bewegen des Energie-Transportmediums, mit dem die gewonnene Energie zum Trocknen transportiert werden kann, dadurch gekennzeichnet, daß mehrere separate Einrichtungen (2, 2a) zur Aufnahme der zu trocknenden wärmeempfindlichen Güter, mindestens eine Einrichtung (1) zur Speicherung und Abgabe der gewonnenen Energie zum Trocknen und mindestens eine Einrichtung (12, 13, 43) zur Entfernung der Feuchtigkeit aus dem Energie-Transportmedium und/oder Rückgewinnung der in dem Energie-Transportmedium enthaltenen Restenergie vorgesehen sind.

2. Anlage nach Anspruch 1, dadurch gekennzeichnet, daß vor jeder Einrichtung (2, 2a) zur Aufnahme der wärmeempfindlichen Güter mindestens eine separate Einrichtung (4, 12a) zum Bewegen des Energie-Transportmediums angeordnet ist.

3. Anlage nach einem der Ansprüche 1 oder 2, worin die Einrichtung(en) zur Gewinnung von Energie zum Trocknen eine Einrichtung ist, mit der Energie aus umweltfreundlichen Energiequellen gewonnen werden kann, bevorzugt eine Einrichtung aus der aus Solaranlage, Windkraftanlage, mit regenerierbarem Treibstoff betriebener Motor, Gäranlage mit Gärgasverbrennung und Mischformen dieser Anlagen gewählten Gruppe ist.

4. Anlage nach einem der Ansprüche 1 bis 3, worin die Einrichtung(en) zur Gewinnung von Energie zum Trocknen ein mit regenerierbarem Pflanzenöl betriebener Motor ist, besonders bevorzugt ein solcher Motor, der Einrichtungen aufweist, mit denen auch die abgestrahlte (Wärme-) Energie, die Kühlflüssigkeits- (Wärme-) Energie und/oder die Abgas(Wärme-) Energie genutzt werden können.

5. Anlage nach einem der Ansprüche 1 bis 4, umfassend zusätzlich einen fluiden Träger zur Aufnahme der erzeugten Trockenenergie, bevorzugt einen gasförmigen Träger, noch mehr bevorzugt ein oder mehrere Gase aus der Gruppe Stickstoff, Sauerstoff, Wasserstoff, Edelgase und deren Mischungen, weiter bevorzugt Luft.

6. Anlage nach einem der Ansprüche 1 bis 5, umfassend einen geschlossenen Kreislauf zur Führung des fluiden Energieträgers zur Aufnahme der erzeugten Trockenenergie.

7. Anlage nach einem der Ansprüche 1 bis 5, umfassend einen Kreislauf zur Führung des fluiden Energieträgers zur Aufnahme der erzeugten Trockenenergie unter Austausch eines Teils des fluiden Trägers mit der Umgebung oder einem Vorrat für den fluiden Träger.

8. Verfahren zum Trocknen wärmeempfindlicher Güter mittels eines auf eine Temperatur, die unterhalb einer kritischen Temperatur liegt, erwärmten fluiden Energie-Transportmediums in einer Einrichtung (2, 2a) zur Aufnahme umfassend die Schritte, daß man
(a) ein fluides Energie-Transportmedium unter Anwendung ressourcenschonender Energieträger erwärmt;
(b) das erwärmte fluide Energie-Transportmedium durch einen Energiespeicher 1 leitet und dort einen Gleichgewichtszustand zwischen fluidem Energie-Transportmedium und Energiespeicher 1 einstellt, dessen physikalische Parameter unterhalb kritischer Werte liegen, insbesondere dessen Temperatur unterhalb der kritischen Temperatur liegt;
(c) das so konditionierte fluide Energie-Transportmedium nach Passieren einer Einrichtung (6) zum Mischen des fluiden Energie-Transportmediums mittels mehrerer Einrichtungen (4, 12a) zum Bewegen des fluiden Energie-Transportmediums mehreren Einrichtungen (2, 2a) zur Aufnahme zu trocknender wärmeempfindlicher Güter separat zuleitet, die mit wärmeempfindlichen Gütern bestückt sind, und dort einen Gleichgewichtszustand zwischen fluidem Energie-Transportmedium und den zu trocknenden wärmeempfindlichen Gütern herstellt;
(d) das fluide Energie-Transportmedium unter Zurücklassen wenigstens teilweise getrockneter wärmeempfindlicher Güter aus den Einrichtungen (2, 2a) zur Aufnahme wärmeempfindlicher Güter abzieht und einer oder mehreren Einrichtungen (12, 13, 43) zur Entfernung der Feuchtigkeit aus dem fluiden Energie-Transportmedium und gegebenenfalls zur Rückgewinnung der in dem fluiden Energie-Transportmedium enthaltene Restenergie zuführt; und anschließend
(e) das fluide Energie-Transportmedium entweder dem Energiespeicher (1) zur Einstellung eines neuen Gleichgewichtszustandes zwischen fluidem Energie-Transportmedium und Energiespeicher (1) oder der Einrichtung (6) zum Mischen des fluiden Energie-Transportmediums für einen neuen Trockenkreislauf zuleitet.

9. Verfahren nach Anspruch 8, worin die kritische Temperatur eine Temperatur ist, bei der die wärmeempfindlichen Güter beginnen, eine Qualitätseinbuße zu erleiden oder thermisch abgebaut zu werden.

10. Verfahren nach einem der Ansprüche 8 oder 9, worin man als fluides Energie-Transportmedium ein Gas oder eine Gasmischung aus der Gruppe Luft, Edelgase wie Helium oder Argon, wenig reaktive Gase wie Stickstoff oder Wasserstoff und Sauerstoff verwendet.

11. Verfahren nach einem der Ansprüche 8 bis 10, worin man als ressourcenschonenden Energieträger einen Energieträger aus der Gruppe Solarenergie, Windenergie und aus der Verbrennung bevorzugt regenerierbarer Brennstoffe gewonnene Verbrennungsenergie verwendet.

12. Verfahren nach einem der Ansprüche 8 bis 11, worin man das fluide Energie-Transportmedium hinsichtlich der Parameter Temperatur, Druck und/oder Feuchtigkeit konditioniert.

13. Verfahren nach einem der Ansprüche 8 bis 12, worin der Trockenvorgang der wärmeempfindlichen Güter mehrere, bevorzugt mindestens drei, Trockenstufen umfaßt oder kontinuierlich durchgeführt wird.

14. Verfahren nach einem der Ansprüche 8 bis 13, worin man das fluide Energie-Transportmedium im Kreislauf führt.

15. Verfahren nach einem der Ansprüche 8 bis 13, worin man das fluide Energie-Transportmedium nach dem Trockenschritt (c) teilweise aus dem Kreislauf abzieht und durch frisches fluides Energie-Transportmedium ersetzt.

16. Verfahren nach einem der Ansprüche 8 bis 14, worin man das fluide Energie-Transportmedium nach dem Trockenschritt (c) nur hinsichtlich des Feuchtigkeitsgehalts konditioniert.

17. Verfahren nach einem der Ansprüche 8 bis 15, worin man das fluide Energie-Transportmedium nach Entzug von Feuchtigkeit mit frischem heißem Energie-Transportmedium unter Einstellung einer unter dem kritischen Wert liegenden Temperatur mischt.
